# EUROPEAN PATENT APPLICATION

(11) **EP 2 680 150 A1**
(43) Date of publication of application: **01.01.2014**
(21) Application number: 12749394.8
(22) Date of filing: 24.01.2012
(51) Int. Cl.: G06F 12/00

(54) **DOCUMENT PROCESSING DEVICE, FILE SERVER MANAGEMENT ASSISTANCE METHOD, AND FILE SERVER MANAGEMENT ASSISTANCE PROGRAM**

(30) Priority: 24.02.2011 JP 2011038590
(71) Applicant: Hitachi Solutions, Ltd., Tokyo 140-0002 (JP)
(72) Inventor: MATSUMOTO Toshiko, Tokyo 140-0002 (JP)
(74) Representative: Liesegang, Eva
(86) International application number: PCT/JP2012/051390
(87) International publication number: WO 2012/114808

(57) **Abstract**

Provided is a technology of efficiently narrowing down files that may be deletable in a file server, and thus reducing the burden on a user in performing an operation of checking if any of the files are deletable. The technology includes displaying the size distribution/cumulative size of files in the file server, and selectively displaying, among the files in the file server, files that seem to have been carefully stored, files that are suspected to be stored in duplicate, or files that have, if deleted, a highly advantageous effect of reducing the used capacity of the file server.

## Description

### Technical Field

The present invention relates to a document processing device, a file server management assistance method, and a file server management assistance program. For example, the present invention relates to a technology of presenting assistance information for sorting a plurality of files stored in a file server, and assisting in the reduction of the used capacity of the file server.

### Background Art

File servers in organizations are highly convenient for storing and sharing electronic data, and are in widespread use. However, as the capacities of the file servers tend to increase, there is an increasing demand for a technology of assisting in and promoting the deletion of unnecessary files. For example, the volume of digital data is explosively increasing (see Non-Patent Literature 1), and it has been inspected and reported that most of the data stored in RDB (Relational Database) in enterprises are unstructured documents such as document files, and only 20% of the data stored in the RDB are structured data (e.g., see Non-Patent Literature 2). Further, software that assists in the deletion of unnecessary files (e.g., see Non-Patent Literature 3 to 5) is proposed.

Such technologies provide a function of presenting files that seem to be unnecessary, using a condition that, for example, the last update date is old, the last access date is old, duplicate files are present, or files with similar file names are present. Among them, there are known a function of automatically archiving/deleting the files, and a function of archiving/deleting the files upon receipt of a user's check/approval.

### Citation List

### Non-Patent Literature

Non-Patent Literature 1: J. F. Gantz, et al. The Diverse and Exploding Digital Universe, An IDC White Paper, http://japan.emc.com/collateral/analyst-reports/diverse-exploding-digital-universe.pdf
Non-Patent Literature 2: S. Grimes, "Unstructured Data and the 80 Percent Rule", Clarabridge Bridgepoints, http://clarabridge.com/default.aspx?tabid=137&ModuleID=635&ArticleID=551
Non-Patent Literature 3: NEC, Document/Content Management Assistance System, InfoFrame PROCENTER/C, http://www.nec.co.jp/pfsoft/procenter/index.html
Non-Patent Literature 4: JustSystems Corporation, GDMS, http://just-enterprise.com/product/gdms/
Non-Patent Literature 5: Hitachi Solutions, Ltd., MEANS Slim File Server Solution, http://hitachisoft.jp/products/means/slimserver/, or http:/hitachi-solutions.co.jp/means_slimserver

### Summary of Invention

### Technical Problem

However, the existing technologies put a focus on if "files seem to be deletable" as described above, and do not follow the tendency of how files have been created and stored in the actual file server. That is, at a site where documents are handled, it is not always the case that old files are immediately deletable. Therefore, there is a problem in that a user should check if any of a huge number of files is deletable until he/she can achieve the target reduction amount.
Further, as the labor and the number of steps requited to check if any of the files are deletable are unknown, there is another problem in that estimation of the number of the required steps as well as the management is difficult to perform. Furthermore, there is still another problem in that a user will be reluctant to perform the operation of checking if any of the files are deletable, in view of avoiding the labor of checking.

Further, there is another problem in that as the files are presented after it is mechanically determined if the files are unnecessary files independently of the content of the files, it is not always the case that the files that are presented are deletable. Thus, there is still another problem in that this will discourage a user to perform the operation of checking if any of the files are deletable.

Furthermore, it is also conceivable that when files containing duplicated data are presented as files that seem to be deletable, such files may be automatically deleted without being checked. However, a circumstance may arise in which, when a file is automatically accessed based on the set folder name/file name information, for example, even a necessary file becomes inaccessible. Thus, automatically deleting files by omitting checking has a limitation. Further, while checking for duplication of files by comparing the full text or all bits of the files will require a long computation time, checking for duplication of files using hash values has a problem in that it has, though low, a possibility of erroneous determination.

The present invention has been made in view of the foregoing circumstances, and provides a technology of efficiently narrowing down files that may be deletable in a file server, and thus reducing the burden on a user in performing the operation of checking if any of the files are deletable.

### Solution to Problem

In order to solve the aforementioned problem, the document processing device of the present invention includes a storage device having stored therein file information including information on a file name, folder name, file size, and update date of a plurality of files stored in a file server, and carefully-stored-data indication information indicating a file that has been carefully backed up by a user; and a processor configured to generate the assistance information on the basis of the file information, and present the assistance information via a display device. The processor is configured to determine, by checking the file information on each of the plurality of files against the carefully-stored-data indication information, if each of the plurality of files is a carefully stored file that has been carefully backed up, sort the plurality of carefully stored files in descending order of the file size, and present a result of the sorting as the assistance information.

Further features related to the present invention will be apparent from the description of this specification and the accompanying drawings. The embodiments of the present invention can be accomplished and implemented by the elements, a combination of various elements, the following detailed description, and the scope of the appended claims.

The description of this specification merely illustrates typical examples. Thus, it should be appreciated that the scope of the claims and the examples of application of the present invention should not be limited in any sense.

### Advantageous Effects of Invention

According to the present invention, it is possible to efficiently narrow down files that may be deletable in a file server, and thus reducing the burden on a user in performing an operation of checking if any of the files are deletable.

### Brief Description of Drawings

Fig. 1 is a functional block diagram showing an exemplary schematic configuration of a business document processing device of the present invention.
Fig. 2 is a diagram showing exemplary data structures of file information, a frequently updated operation name, a temporary operation name, a raw-data indication extension, and a backup indication character string.
Fig. 3 is a diagram showing exemplary data structures of a date regular expression, a backup indication extension, a mail-data indication character string, a deleted-data indication character string, a file-size deletion candidate, and a carefully stored file-size deletion candidate.
Fig. 4 is a flowchart illustrating an overview of a process executed by the business document processing device.
Fig. 5 is a flowchart illustrating the details of a carefully stored file selection process (S402).
Fig. 6 is a flowchart illustrating the details of a carefully backed-up file selection process (S503).
Fig. 7 is a flowchart illustrating the details of a duplicate stored file selection process (S507).
Fig. 8 is a flowchart illustrating the details of a deletion candidate selection process (S403).
Fig. 9 is a view showing an exemplary screen (bar graph display) displayed through a size display process.
Fig. 10 is a view showing an exemplary screen (line graph display) displayed through a size display process.
Fig. 11 is a view showing an exemplary screen (pie chart display) displayed through a size display process.
Fig. 12 is a view showing an exemplary screen (area graph display) displayed through a size display process.
Fig. 13 is a view showing an exemplary screen (table-based display) displayed through a size display process.
Fig. 14 is a view showing an exemplary screen (cumulative bar graph display) displayed through a size display process.
Fig. 15 is a view showing an exemplary screen (cumulative bar graph comparison display) displayed through a size display process.
Fig. 16 is a view showing an exemplary screen (cumulative line graph display) displayed through a size display process.
Fig. 17 is a view showing an exemplary screen (cumulative line graph comparison display) displayed through a size display process.
Fig. 18 is a view showing an exemplary screen (cumulative area graph display) displayed through a size display process.
Fig. 19 is a view showing an exemplary screen (cumulative area graph comparison display) displayed through a size display process.
Fig. 20 is a view showing an exemplary screen (cumulative table display) displayed through a size display process.
Fig. 21 is a view showing an exemplary screen (cumulative table comparison display) displayed through a size display process.
Fig. 22 is a view showing an exemplary screen (bar graph display) that uses a combination of the distribution of the proportion of the used capacity accounted for by each division and the distribution of the file size.
Fig. 23 is a view showing an exemplary screen (bar graph display) that uses a combination of the distribution of the proportion of the used capacity accounted for by each user and the distribution of the file size.
Fig. 24 is a diagram showing a result of inspection of the file size in a file server.

### Description of Embodiments

The present invention solves a problem that it has been necessary for a user to, in deleting unnecessary files in a file server, check if any of a huge number of files is deletable until he/she can achieve the target reduction amount. To this end, in the present invention, the following is performed: displaying the size distribution/cumulative size of files in the file server, and selectively displaying, among the files in the file server, files that seem to have been carefully stored, files that are suspected to be stored in duplicate, or files that have, if deleted, a highly advantageous effect of reducing the used capacity of the file server.

Hereinafter, embodiments of the present invention will be described with reference to the accompanying drawings. In the accompanying drawings, elements that have the same function may be denoted by the same reference numerals. Although the accompanying drawings show specific embodiments and implementation examples in accordance with the principle of the present invention, such drawings are intended to merely help understand the present invention, and should not be used to construe the present invention in a limited way; thus, various variations are conceivable.

Although this embodiment contains fully detailed explanations for those skilled in the art to carry out the present invention, it should be appreciated that other implementations and embodiments are possible, and changes in the configuration and structure and replacement of various elements are possible in so far as they are within the scope and spirit of the technical idea of the present invention. Thus, the following descriptions should not be construed in a limited way.

Further, as described below, the embodiment of the present invention may be implemented by any of software that runs on a general purpose computer, dedicated hardware, or a combination of both.

Although the following description illustrates each information of the present invention in a "table" form, such information need not necessarily be represented by a data structure of a table, and may be represented by a data structure of a list, DB, queue, or the like, or other structures. Therefore, in order to show that each information of the present invention does not depend on its data structure, a "table," "list," "DB," "queue," and the like may be simply referred to as "information."

In addition, in describing the content of each information, an expression such as "identification information," "identifier," "name," "appellation," or "ID" can be used, and such expressions are interchangeable.

In the following description, each process in the embodiment of the present invention is performed by a "program" as a subject (a subject that performs the operation). However, as a program performs a determined process using a memory and a communication port (a communication control device) by being executed by a processor, the description may also be made with a processor as a subject. Further, a process that is disclosed as being performed by a program as a subject may be a process that is performed by a computer such as a management server or an information processing device. Some or all of programs may be implemented by dedicated hardware, or may be implemented as a module(s). Each program may be installed on each computer by a program distribution server or a storage medium.

### <Tendency of files stored in file server>

Hereinafter, the tendency of the storage pattern of files, which was discovered by the inventor by inspecting file servers in an enterprise, will be described. As a result of the inspection, the inventor has found that there are generally two tendencies.

(1) Feature (Tendency)1: The sizes of files stored in a file server are not uniform; a small number of large-size files account for a high proportion of the capacity of the file server.

It is obvious that files stored in a file server come in a variety of sizes. Files that have only text information have a size of less than one kilobyte at the minimum. Conversely, it has not been unusual in recent years that files having a large number of images for use in presentations have a size of over 1 megabyte.

Further, with an increase in the throughput of computers, the maximum size of files that a user can comfortably create and view is gradually increasing. As a file server has both files stored in the past and files stored now, it is easily conceivable that most of the files stored in the file server are small-size files.

However, when the files were actually collected and the sizes thereof were inspected, it was found that the bias of the distribution was far greater than had been expected.

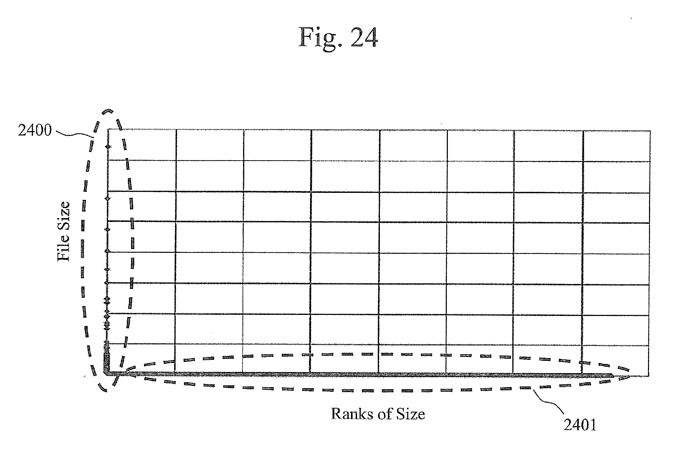

Fig. 24 shows a graph obtained by collecting files and sorting them in descending order of file size, setting the ranks of the file size in the horizontal axis, setting the value of the file size in the vertical axis, and plotting each file residing in the file server. From this graph, a circumstance was observed in which a very low proportion of huge files reside, and a large number of files other than those have a relatively small size to a negligible level.

There is generally known an empirical rule called "Pareto principle" or "80-20 rule" that states that "80% of your profits come from 20% of your customers," "80% of incomes of the entire society come from 20% of high-income workers," and "80% of defects come from 20% of causes."

However, the degree of the bias of the file server was found to be far greater, and there were even cases where the top 1%, in terms of size, of files accounted for 90% of the total capacity of the file server.

From the foregoing, it was found that if files are to be deleted to avoid an increase in the used capacity of the file server, there will be no advantageous effect unless it is checked if files in the portion indicated by reference numeral (dotted frame) 2400 are deletable (conversely, it was found that even if files "which seem to be deletable" as focused in the present technology are deleted over and over, if the deleted files are those corresponding to the portion indicated by reference numeral (dotted frame) 2401, the burden and the number of steps required to check if any of the files are deletable will just increase, and thus it will remain difficult to secure the capacity of the file server). For example, in the aforementioned case where "the top 1%, in terms of size, of files account for 90% of the total capacity of the file server," even if a huge number of steps of checking if 99% of the files are deletable are performed and all of them are found to be deletable, it follows that only 10% of the total capacity can be saved.

(2) Feature (Tendency) 2: among large-size files stored in a file server, files, which seem to be backup files created by individuals on a per-folder basis and stored carefully and redundantly, account for a given proportion.

Even in a circumstance in which a small number of large-size files account for a high proportion of the total capacity of the file server as described with reference to Feature 1, it would be impossible to reduce the size unless such files are deletable.

However, when the files were actually collected to inspect the types of the large-size files, a number of files, which seem to be deletable, were found that seem to be backup files created by individuals on a per-folder basis and stored carefully and redundantly. In normal file operations, users are rarely aware of the file size except when sending e-mail. Therefore, the user's perception about what types of files account for a high proportion of the total capacity of the file server often differs from the reality. There were not a few cases where a creator of a file was surprised and disappointed to say: "I never expected that this type of file accounted for such a high proportion of the total capacity of the file server."

Further, the inventor, as a result of conducting a further inspection about Feature 2 above, found that there is the following tendency.

Feature 2-1: Even when a file name includes the name of a technical field that is advancing rapidly, the name of an operation that is performed constantly, and the like, and it is thus speculated that the file should be updated frequently, there are cases where the last update date of the file is old.

Feature 2-2: There are cases where, even when a file name includes the name of an operation that indicates temporary content, and it is thus speculated that such a file need not be stored for a long period of time, the last update date of the file is old.

Feature 2-3: There are cases where, even when a file has an extension that indicates that the file is unprocessed, raw data, and the same folder contains a file with a similar file name and a different extension, and it is thus speculated that the folder contains a processed file, the last update date of the file is old.

Feature 2-4: There are cases where, even when a file name includes a character string that indicates that the file is a backup, the update date of the file is old.

Feature 2-5: There are cases where, even when a file name includes a character string indicating a date, and it is thus speculated that the file is a backup, the update date of the file is old.

Feature 2-6: There are cases where, even when a file has an extension indicating that the file is a backup, the update date of the file is old.

Feature 2-7: There are cases where, even when a folder name indicates mail data, the last update dates of all files contained in the folder are old.

Feature 2-8: There are cases where, even when a file name includes a character string indicating that the file is the deleted data, the update date of the file is old.

Feature 2-9: There are cases where, even when a folder name includes a character string indicating that the folder is the deleted data, the last update dates of all files contained in the folder are old.

Feature 2-10: There are cases where folders with similar names contain files with the same file name, size, and update date, and it is thus suspected that such files are duplicate files.

Feature 2-11: There are cases where large-size files that are equal in size exist, and it is thus suspected that such files are duplicate files.

Feature 2-12: There are cases where folders with similar names contain files that have close size and update date and have the same file name, and it is thus speculated that such files are backup files of different generations.

Feature 2-13: There are cases where a single folder contains a file with an extremely older update date than other files contained in the folder, which indicates that the file has been copied from another place with reference to the old file.

Based on the tendencies (features) found out as described above, the processes of presenting deletable files in accordance with the embodiments of the present invention will be sequentially described in detail with reference to the configuration of the business document processing device (document processing system).

### <Configuration of Business Document Processing Device>

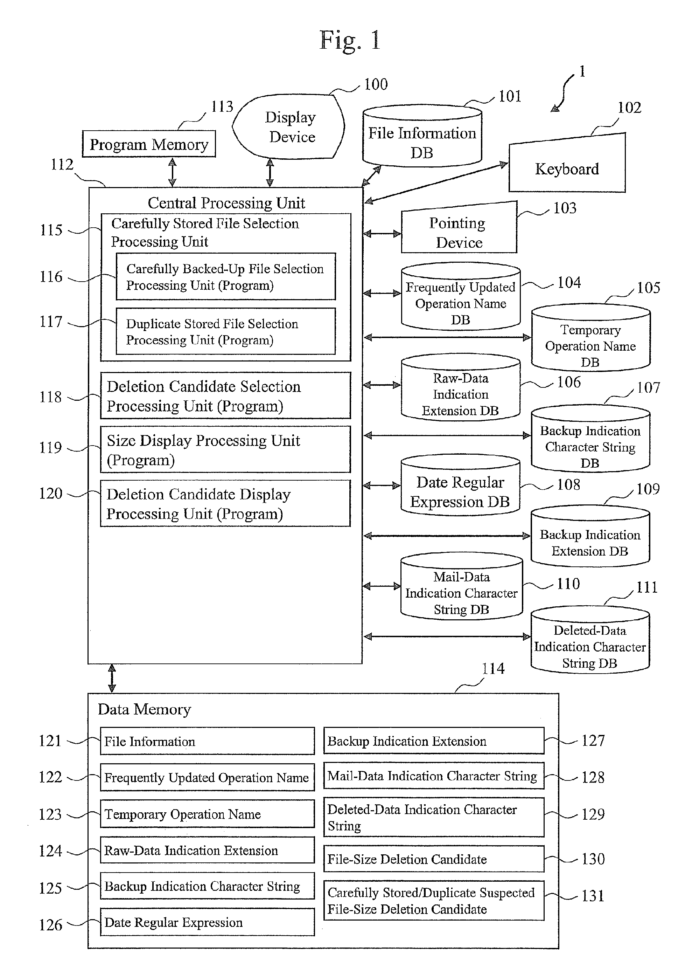

Fig. 1 is a functional block diagram showing a schematic internal configuration of a business document processing device 1. Although the business document processing device 1 is shown as a stand-alone computer, it may also be configured as a computer system in which each constituent unit is arranged remotely and is connected to each other via a network.

The business document processing device 1 includes a display device 100 for displaying data, a file information DB 101, a keyboard 102 for performing an operation on displayed data such as selecting a menu, a pointing device 103 such as a mouse, a frequently updated operation name DB 104, a temporary operation name DB 105, raw-data indication extension DB 106, a backup indication character string DB 107, a date regular expression DB 108, a backup indication extension DB109, a mail-data indication character string DB 110, a deleted-data indication character string DB 111, a central processing unit (processor) 112 that performs necessary arithmetic processing, a control process, and the like, a program memory 113 for storing programs that are necessary for processing in the central processing unit 112, and a data memory 114 for storing data that is necessary for processing in the central processing unit 112.

The central processing unit 112 includes a carefully stored file selection processing unit 115, a deletion candidate selection processing unit 118, a size display processing unit 119, and a deletion candidate display processing unit 120. The carefully stored file selection processing unit 115 includes a carefully backed-up file selection processing unit 116 and a duplicate stored file selection processing unit 117. It should be noted that in this embodiment, each of the processing units 115 to 120 is configured by a computer. Thus, each of the carefully stored file selection processing unit 115, the deletion candidate selection processing unit 118, the size display processing unit 119, and the deletion candidate display processing unit 120 is implemented as part of the function of a program executed on the computer. Accordingly, each processing unit can also be read as a processing unit. Such programs are stored in the program memory 113.

The data memory 114 has as information stored therein file information 121, a frequently updated operation name 122, a temporary operation name 123, a raw-data indication extension 124, a backup indication character string 125, a date regular expression 126, a backup indication extension 127, a mail-data indication character string 128, a deleted-data indication character string 129, a file-size deletion candidate 130, and a carefully stored/duplicate suspected file-size deletion candidate 131.

### <Exemplary configuration of management information>

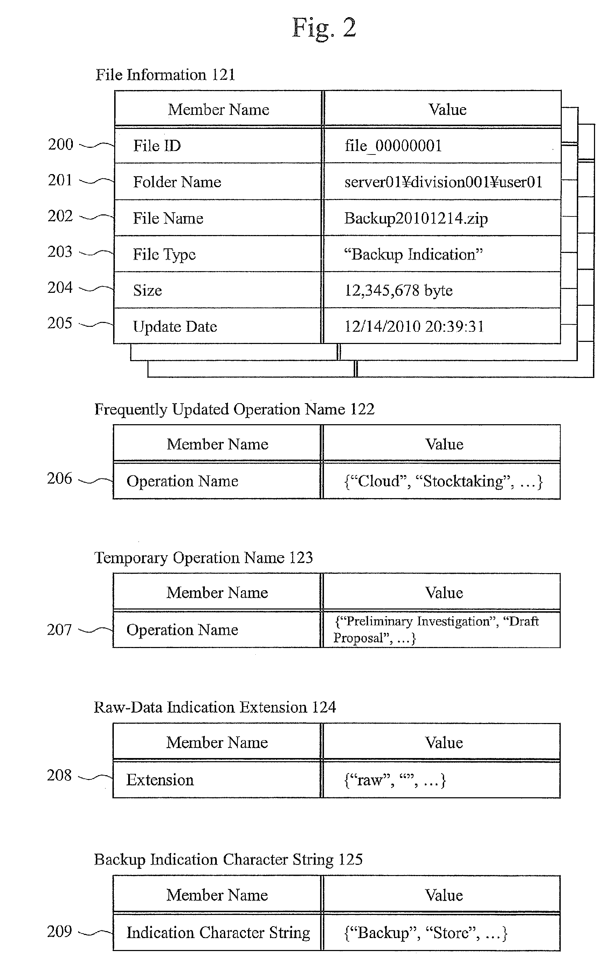

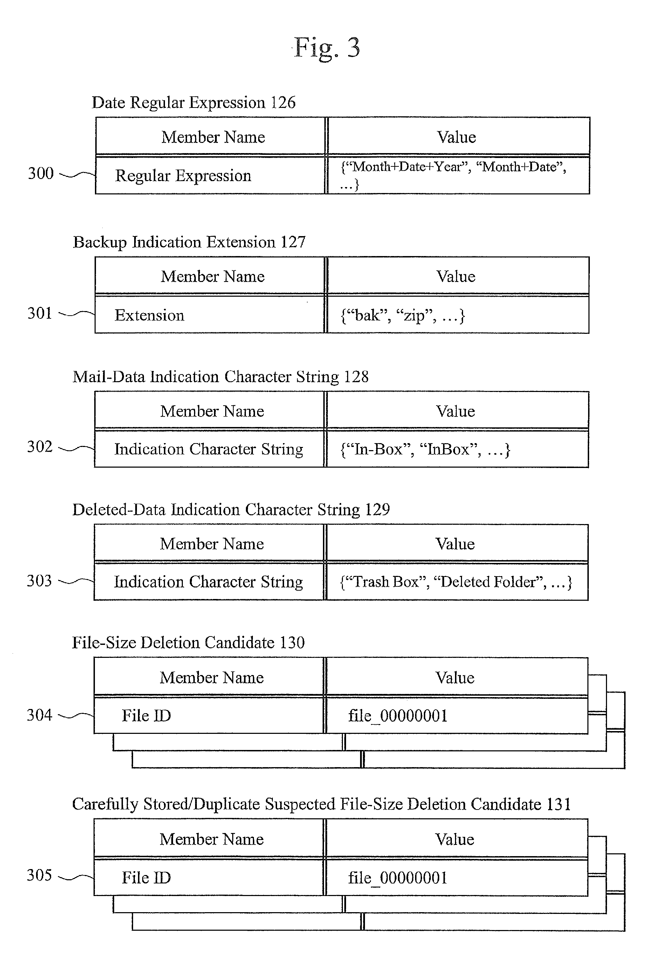

Figs. 2 and 3 are diagrams each showing an exemplary structure of the management information included in the data memory 114.

Fig. 2 is a diagram showing exemplary data structures of the file information 121, the frequently updated operation name 122, the temporary operation name 123, the raw data indication extension 124, and the backup indication character string 125.

The file information 121 includes information on a file ID 200, a folder name 201, a file name 202, a file type 203, a size 204, and an update date 205, and holds such information in an array form. The file ID 200 is an ID uniquely assigned to a file. The folder name 201 is information indicating the absolute path of a folder in which the file is stored. The file name 202 is information indicating an identification name such as the name of the file. The file type 203 is an empty character string in the initial state, and a result of particular file-type-based processing is entered in this field. The size 204 is information indicting the size of a target file, and is held in units of bytes. The update date 205 is information about a point in time when a writing process on the target file was last performed.

The frequently updated operation name 122 has an operation name 206 that is frequently updated as the constituent information. The operation name 206 is the name of an operation in which a document is supposed to be required to be updated frequently, such as the name of a technology that progresses rapidly or the name of a management operation that is periodically repeated, and is held in the form of an array of character strings.

The temporary name 123 has an operation name 207 indicating a primary operation as the constituent information. The operation name 207 is the name of an operation that is supposed to be a document that is used only temporarily, such as a temporary product, and is held in the form of an array of character strings.

The raw-data indication extension 124 has an extension 208 including a file extension as the constituent information. The extension 208 is an extension name used for a stored image or sound file that is not processed yet, and is held in the form of an array of character strings.

The backup indication character string 125 has an indication character string 209 indicating a backup as the constituent information. The indication character string 209 is a name that is supposed to be included when a user has stored a file as a backup, and is held in the form of an array of character strings.

Fig. 3 is a diagram showing exemplary data structures of the date regular expression 126, the backup indication extension 127, the mail-data indication character string 128, the deleted-data indication character string 129, the file-size deletion candidate 130, and the carefully stored/duplicate suspected file-size deletion candidate 131. The date regular expression 126 has a regular expression 300 of a date as the constituent information. The regular expression 300 is a regular expression that is supposed to state a date, month, and year by including, for example, the "date," "month," and "year," and is held in the form of an array of character strings.

The backup indication extension 127 has an extension 301 that has a possibility of indicating a backup as the constituent information. The extension 301 is an extension of a file that is supposed to have been stored by a user for a backup, and is held in the form of an array of character strings.

The mail-data indication character string 128 has an indication character string 302 that seems to indicate mail data as the constituent information. The indication character string 302 is a name that is supposed to be included in a file having mail data stored therein, and is held in the form of an array of character strings.

The deleted-data indication character string 129 has an indication character string 303 indicating that the file is the deleted file as the constituent information. The indication character string 303 is a name that is supposed to be included in a file having data with a deleted flag stored therein, and is held in the form of an array of character strings.

The file-size deletion candidate 130 holds a file ID 304 of a file that is a candidate for the deletion of the file size, in the form of an array. The file ID 304 indicates the file ID 200 of the file information.

The carefully stored/duplicate suspected file-size deletion candidate 131 holds a file ID 305 of a file, which may possibly be a file that has been carefully stored or stored in duplicate, in the form of an array of character strings. The file ID 305 indicates the file ID 200 of the file information.

### <Overview of process of business document processing device>

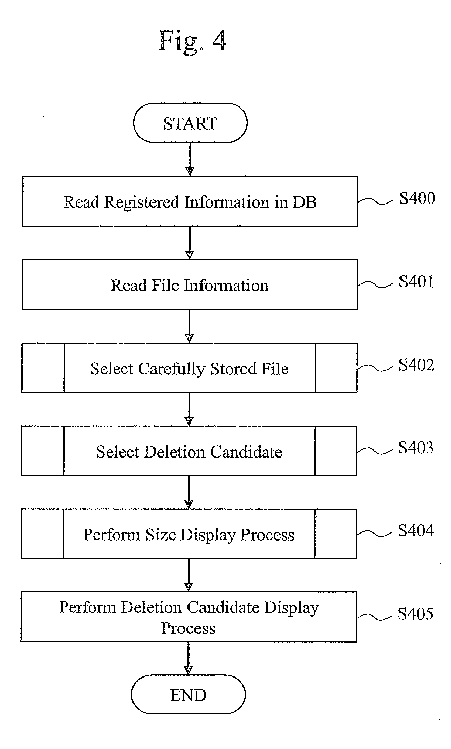

Next, an overview of a process performed by the business document processing device 1 in accordance with this embodiment configured as above will be described. Fig. 4 is a flowchart illustrating an overview of a process executed by the business document processing device 1.

In Fig. 4, the central processing unit (processor) 112 first reads registered information of each DB from the DBs 104 to 111 (step 400). Then, the central processing unit 112 reads information in the frequently updated operation name DB 104 and stores it in the frequently updated operation name 122, reads information in the temporary operation name DB 105 and stores it in the temporary operation mane 123, reads information in the raw-data indication extension DB 106 and stores it in the raw-data indication extension 124, reads information in the backup indication character string DB 107 and stores it in the backup indication character string 125, reads information in the date regular expression DB 108 and stores it in the date regular expression 126, reads information in the backup indication extension DB109 and stores it in the backup indication extension 127, reads information in the mail-data indication character string DB 110 and stores it in the mail-data indication character string 128, and reads information in the deleted-data indication character string DB 111 and stores it in the deleted-data indication character string 129. Note that the file-size deletion candidate 130 and the carefully stored/duplicate suspected file-size deletion candidate 131 initially have no data stored therein as there is no target DB to read data.

Next, the central processing unit 112 reads file information from the file information DB 101 (step 401). The result of reading is stored in the file information 121. At this stage, the type of each file is not inspected yet. Thus, the file type 203 is empty.

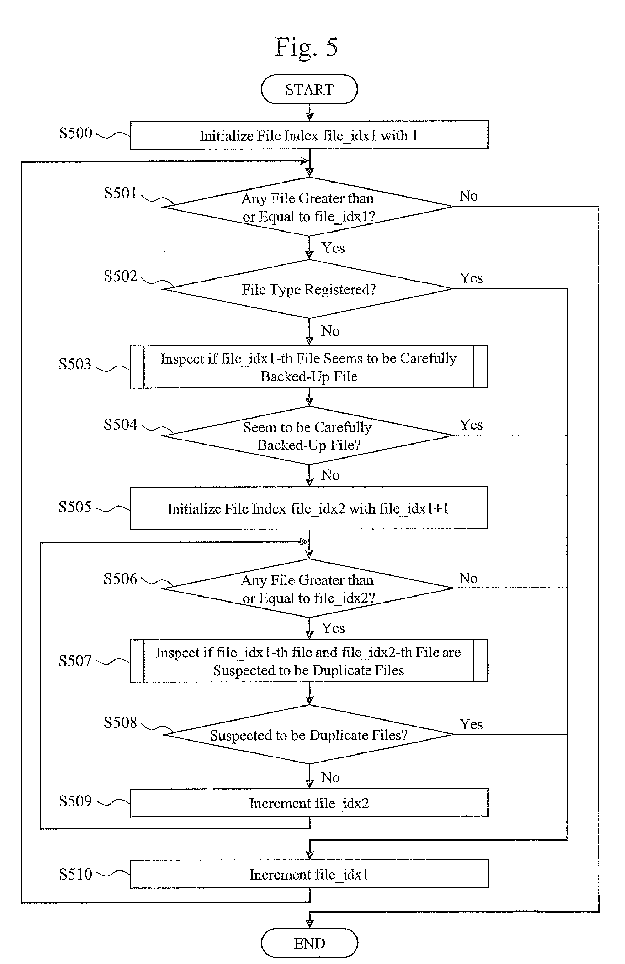

After that, the carefully stored file selection processing program 115 executes a carefully stored file selection process (step 402). The details of the process will be described with reference to Fig. 5.

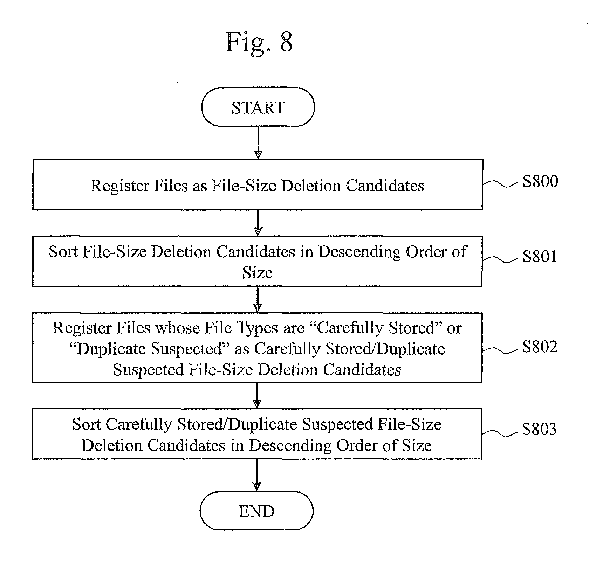

Then, the deletion candidate selection processing program 118 executes a deletion candidate selection process (step 403). The details of the process will be described with reference to Fig. 8.

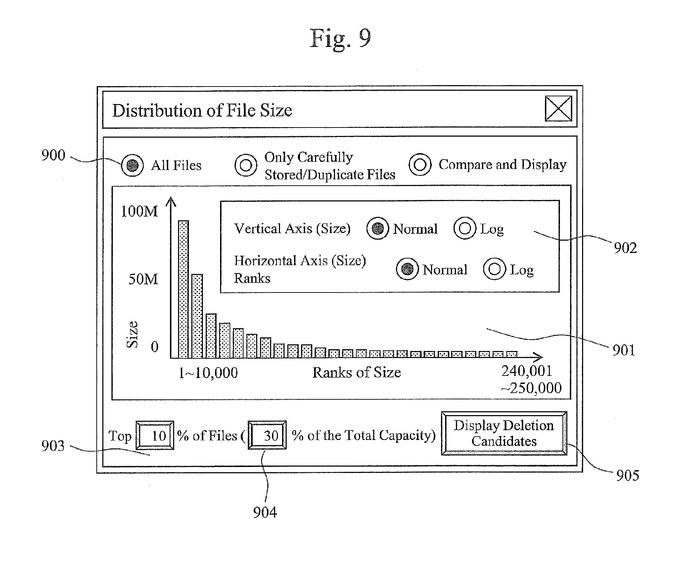

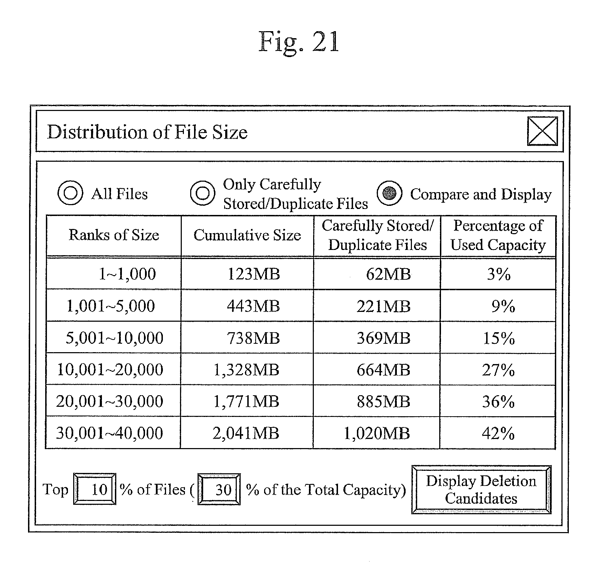

Further, the size display processing program 119 executes a size display process (step 404). Exemplary displays of a screen obtained as a result of this process will be described with reference to Figs. 9 and 21.

Finally, the deletion candidate display processing unit 120 executes a deletion candidate display process (step 405). This process can be executed using the existing technology described in Non-Patent Literature 5. Accordingly, the details of the description will be omitted.

### <Details of the carefully stored file selection process (S402)>

Fig. 5 is a flowchart for illustrating the details of the carefully stored file selection process in step 402 in Fig. 4.

First, the carefully stored file selection processing program 115 initializes an index variable file_idx1 for repeatedly performing a process on each file as a processing target (step 500).

Next, the carefully stored file selection processing program 115 inspects if the file information 121 includes data that is greater than or equal to the file_idx1 (step 501). If the target data is absent (if the result of S501 is No), the process terminates. If a file that is greater than or equal to the file_idx1 is determined to be present in step 501 (if the result of S501 is Yes), the process proceeds to step 502.

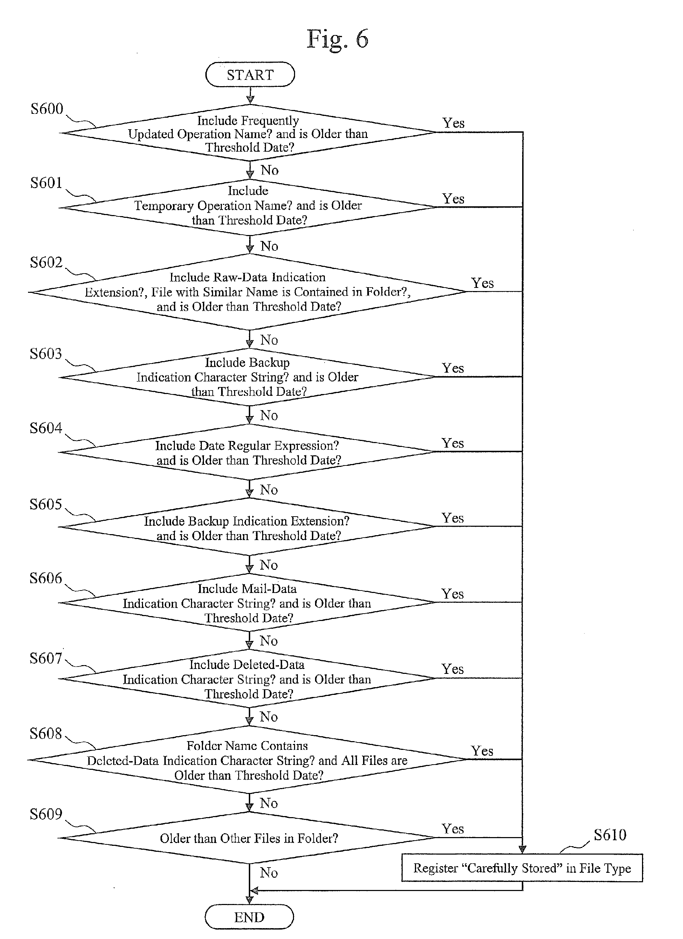

In step 502, the carefully stored file selection processing program 115 inspects if the file type 203 of the file_idx1-th file information element is registered (step 502). If the file type 203 is registered (if the result of S502 is Yes), the carefully stored file selection processing program 115 increments the file_idx1 (step 510), and repeats the process from step 501. Meanwhile, if the file type 203 is not registered (if the result of S502 is No), the process proceeds to step 503, and the carefully stored file selection processing program 115 inspects if the file seems to be a carefully backed-up file (step 503). This process is executed by the carefully backed-up file selection processing program 116 that is called by the carefully stored file selection processing program 115. The details of the process are described below with reference to Fig. 6.

Next, the carefully stored file selection processing program 115 checks information on the file type 203 that is the result obtained through the process in step 503, and checks if it is determined that the file seems to be a carefully backed-up file (step 504). If it is determined that the file seems to be a carefully backed-up file (if the result of S504 is Yes), the carefully stored file selection processing program 115 increments the file_idx1 (step 510), and repeats the process from step 501. If it is not determined that the file seems to be a carefully backed-up file in step 504 (if the result of S504 is No), the carefully stored file selection processing program 115 initializes an index variable file_idx2 (another comparison target file) for inspecting a pair of files, using file_idx1 +1 (step 505).

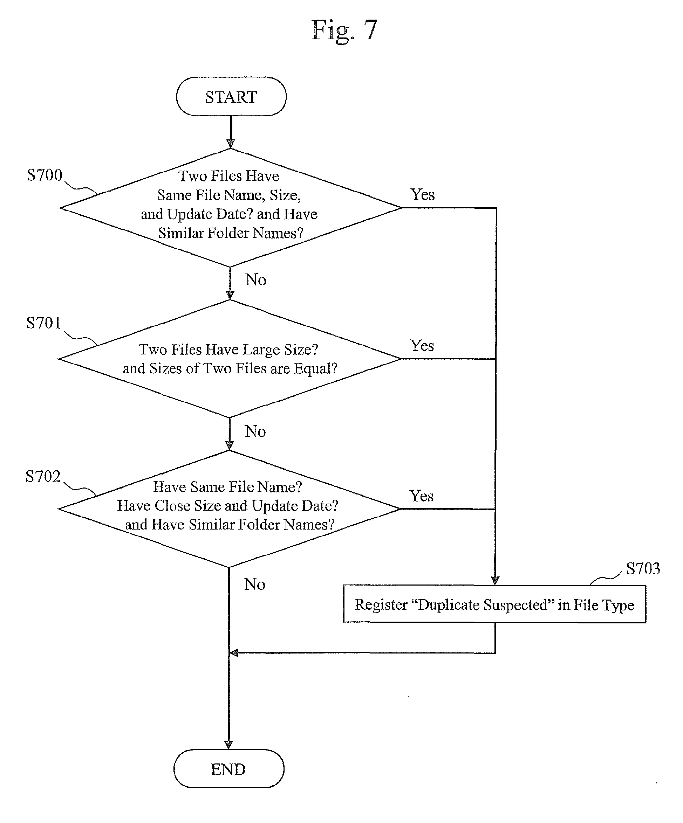

Then, the carefully stored file selection processing program 115 inspects if the file information 121 includes data that is greater than or equal to the file_idx2 (step 506). If the relevant data is absent (if the result of S506 is No), the carefully stored file selection processing program 115 increments the file_idx1 (step 510), and repeats the process from step 501. If it is determined that a file that is greater than or equal to the file_idx2 is present in step 506 (if the result of S506 is Yes), the carefully stored file selection processing program 115 inspects if the file_idx1-th file and the file_idx2-th file are suspected to be duplicate files (step 507). This process is executed by the duplicate stored file selection processing program 117 that is called by the carefully stored file selection processing program 115. The details of the process are described below with reference to Fig. 7.

Next, the carefully stored file selection processing program 115 checks the information on the file type 203 that is the result obtained in step 507 and, if it is determined that the files have been suspected to be duplicate files (if the result of S508 is Yes), the carefully stored file selection processing program 115 increments the file_idx1 (step 510), and repeats the process from step 501. If it is not determined that the files have been suspected to be duplicate files (if the result of S508 is No), the carefully stored file selection processing program 115 increments the file_idx2 of the comparison target file (step 509), and repeats the process from step 506.

Accordingly, selection of the carefully stored file from among the processing target files is completed.

### <Details of the carefully backed-up file checking process (S503)>

Fig. 6 is a flowchart illustrating the details of the process of checking if the file seems to be a carefully backed-up file in step S503 in Fig. 5.

First, the carefully backed-up file selection processing program 116 inspects if the folder name 201 or the file name 202 included in the file information 121 includes any of the array elements of the operation name 206 of the frequently updated operation name 122, and also inspects if the update date 205 is older than the threshold (step 600). As the threshold, a value of the date and time that is one year prior to the current date and time, the start date of the previous fiscal year, or the like is used. If both the conditions are satisfied in step 600 (if the result of S600 is Yes), it is considered that the file is a carefully backed-up file in accordance with Feature 2-1. Thus, the carefully backed-up file selection processing program 116 registers "carefully stored" in the file type 203 (step 610), and terminates the process. Meanwhile, if neither of the conditions is satisfied in step 600 (if the result of S600 is No), the process proceeds to step 601.

In step 601, the carefully backed-up file selection processing program 116 inspects if the folder name 201 or the file name 201 includes any of the array elements of the operation name 207 of the temporary operation name 123, and also inspects if the update date 205 is older than the threshold (step 601). If both the conditions are satisfied (if the result of S601 is Yes), it is considered that the file is a carefully backed-up file in accordance with Feature 2-2. Thus, the carefully backed-up file selection processing program 116 registers "carefully stored" in the file type 203 (step 610), and terminates the process. Meanwhile, if neither of the conditions is satisfied in step 601 (if the result of S601 is No), the process proceeds to step 602.

In step 602, the carefully backed-up file selection processing program 116 inspects if the file name 202 includes any of the array elements of the extension 208 of the raw-data indication extension 124, and also inspects if there is file information that has the same folder name 201 and a similar file name 202, and if the update date 205 is older than the threshold (step 602). Similarity of the fine names can be determined using the existing technology such as dynamic programming. If all of the aforementioned conditions are satisfied in step 602 (if the result of S602 is Yes), it is considered that the file is a carefully backed-up file in accordance with Feature 2-3. Thus, the carefully backed-up file selection processing unit 116 registers "carefully stored" in the file type 203 (step 610), and terminates the process. Meanwhile, if none of the aforementioned conditions is satisfied in step 602 (if the result of S602 is No), the process proceeds to step 603.

In step 603, the carefully backed-up file selection processing program 116 inspects if the folder name 201 or the file name 202 includes any of the array elements of the indication character string 209 of the backup indication character string 125, and also inspects if the update date 205 is older than the threshold (step 603). If both the conditions are satisfied (if the result of S603 is Yes), the file is considered to be a carefully backed-up file in accordance with Feature 2-4. Thus, the carefully backed-up file selection processing program 116 registers "carefully stored" in the file type 203 (step 610), and terminates the process. If neither of the aforementioned conditions is satisfied in step 603, (if the result of S603 is No), the process proceeds to step 604.

In step 604, the carefully backed-up file selection processing program 116 inspects if the folder name 201 or the file name 202 matches the regular expression 300 of any of the array elements of the date regular expression 126, and also inspects if the value of the date is older than the threshold (step 604). If both the conditions are satisfied (if the result of S604 is Yes), it is considered that the file is a carefully backed-up file in accordance with Feature 2-5. Thus, the carefully backed-up file selection processing program 116 registers "carefully stored" in the file type 203 (step 610), and terminates the process. Meanwhile, if none of the aforementioned steps is satisfied in step 604 (if the result of S604 is No), the process proceeds to step 605.

In step 605, the carefully backed-up file selection processing program 116 inspects if the file name 202 includes any of the array elements of the extension 301 of the backup indication extension 127, and also inspects if the update date 205 is older than the threshold (step 605). If both the conditions are satisfied (if the result of S605 is Yes), it is considered that the file is a carefully backed-up file in accordance with Feature 2-6. Thus, the carefully backed-up file selection processing program 116 registers "carefully stored" in the file type 203 (step 610), and terminates the process. Meanwhile, if neither of the conditions is satisfied in step 605 (if the result of S605 is No), the process proceeds to step 606.

In step 606, the carefully backed-up file selection processing program 116 inspects if the folder name 201 or the file name 202 includes any of the array elements of the indication character string 302 of the mail-data indication character string 128, and also inspects if the update date 205 is older than the threshold (step 606). If both the conditions are satisfied (if the result of S606 is Yes), it is considered that the file is a carefully backed-up file in accordance with Feature 2-7. Thus, the carefully backed-up file selection processing program 116 registers "carefully stored" in the file type 203 (step 610), and terminates the process. Meanwhile, if neither of the aforementioned conditions is satisfied in step 606 (if the result of S606 is No), the process proceeds to step 607.

In step 607, the carefully backed-up file selection processing program 116 inspects if the file name 202 includes any of the array elements of the indication character string 303 of the deleted-data indication character string 129, and also inspects if the update date 205 is older than the threshold (step 607). If both the conditions are satisfied (if the result of S607 is Yes), it is considered that the file is a carefully backed-up file in accordance with Feature 2-8. Thus, the carefully backed-up file selection processing program 116 registers "carefully stored" in the file type 203 (step 610), and terminates the process. Meanwhile, if neither of the aforementioned conditions is satisfied in step 607 (if the result of S607 is No), the process proceeds to step 608.

In step 608, the carefully backed-up file selection processing program 116 inspects if the folder name 201 includes any of the array elements of the indication character string 303 of the deleted-data indication character string 129, and also inspects if the update dates 205 of all files contained in the same folder are older than the threshold (step 608). If both the conditions are satisfied (if the result of S608 is Yes), it is considered that the file is a carefully backed-up file. Thus, the carefully backed-up file selection processing unit 116 registers "carefully stored" in the file type 203 (step 610), and terminates the process. Meanwhile, if neither of the aforementioned conditions is satisfied in step 608 (if the result of S608 is No), the process proceeds to step 609.

In step 609, the carefully backed-up file selection processing program 116 inspects if the update date 205 is extremely older than those of all of the other files contained in the same folder (step 609). If the update date 205 should be regarded as being "extremely older" can be determined using the ordinary statistical analysis. If the condition is satisfied (if the result of S609 is Yes), it is considered that the file is a carefully backed-up file in accordance with Feature 2-13. Thus, the carefully backed-up file selection processing program 116 registers "carefully stored" in the file type 203 (step 610), and terminates the process. Meanwhile, if neither of the aforementioned conditions is satisfied in step 609 (if the result of S609 is No), the process terminates as is.

Through the aforementioned process, it is determined if the processing target file is a file that has been carefully backed up and still remains now (a carefully backed-up file), and a file that is determined to be a carefully backed-up file is classified as a "carefully stored" file.

### <Details of the duplicated file checking process (S508)>

Fig. 7 is a flowchart illustrating the details of the process of checking if the target files are suspected to be duplicate files in step 508 of Fig. 5.

First, the duplicate stored file selection processing program 117 inspects if the two files: the file_idx1-th file and the file_idx2-th file in Fig. 5 have the same file name 202, the same size 204, and the same update date 205, and have similar folder names 201 (step 700). If the folder names are similar can be determined using the existing technology such as dynamic programming in which character strings are compared and if the result of comparison is greater than or equal to a threshold is determined. If both the aforementioned conditions are satisfied (if the result of S700 is Yes), it is suspected that the files are duplicate files in accordance with Feature 2-10. Thus, the duplicate stored file selection processing program 117 registers "duplicate suspected" in the file type 203 (step 703), and terminates the process. Meanwhile, if neither of the aforementioned conditions is satisfied in step 700 (if the result of S700 is No), the process proceeds to step 701.

In step 701, the duplicate stored file selection processing program 117 inspects if both the two files: the file_idx1-th file and the file_idx2-th file in Fig. 5 have a large size 204, and also if the sizes 204 of the two files are equal (step 701). If the file size is large can be determined using a threshold of 1 GB or greater, for example. If both the aforementioned conditions are satisfied (if the result of step 701 is Yes), it is suspected that the two files are duplicate files in accordance with Feature 2-11. Thus, the duplicate stored file selection processing program 117 registers "duplicate suspected" in the file type 203 (step 703), and terminates the process. Meanwhile, if neither of the aforementioned conditions is satisfied in step 701 (if the result of S701 is No), the process proceeds to step 702.

In step 702, the duplicate stored file selection processing program 117 inspects if the two files: the file_idx1-th file and the file_idx2-th file in Fig. 5 have the same file name 202 and have close values of the size 204 and the update date 205, and also inspects if the folder names 201 are similar (step 702). If the sizes and the update dates are close can be determined through computation such as, for example, determining if the difference is less than or equal to 10% of the maximum value, and using a threshold. Further, if the folder names are similar can be determined using the ordinary alignment technology. If all of the aforementioned conditions are satisfied (if the result of S702 is Yes), it is suspected that the two files are duplicate files in accordance with Feature 2-12. Thus, the duplicate stored file selection processing program 117 registers "duplicate suspected" in the file type 203 (step 703), and terminates the process. Meanwhile, if none of the aforementioned conditions is satisfied in step 702 (if the result of S702 is No), the process terminates as is.

Through the aforementioned process, it is determined if the processing target files are files that are suspected to be stored in duplicate (duplicate suspected files), and files that are determined to be duplicate suspected files are classified as "duplicate suspected" files.

### <Details of the deletion candidate selection process (S403).

Fig. 8 is a flowchart illustrating the details of the process of selecting the deletion candidate in step 403 of Fig. 4.

First, the deletion candidate selection processing program 118 copies the file IDs 200 of all array elements stored in the file information 121 into the file IDs 304 of the respective array elements of the file-size deletion candidate 130 (step 800).

Next, the deletion candidate selection processing program 118 sorts the array elements of the file-size deletion candidate 130 in descending order of the size 204 of the array elements of the file information 121 with the same file ID 200 as the file ID 304. Through the processes in steps 800 and 801, all of the files are sorted in terms of the file size, and thus the deletion candidates are extracted.

In addition, the deletion candidate selection processing program 118, among the array elements stored in the file information 121, copies files whole file types 203 have "carefully stored" or "duplicate suspected" registered therein into the file IDs 305 of the respective array elements of the carefully stored/duplicate suspected file-size deletion candidate 131.

Then, the deletion candidate selection processing program 118 sorts the array elements of the carefully stored/duplicate suspected file-size deletion candidate 131 in descending order of the size 204 of the array elements of the file information 121 with the same file ID 200 as the file ID 305 (step 803). Through the processes in steps 802 and 803, all of the carefully stored files and the duplicate-stored suspected files are sorted in terms of the file size, and thus the deletion candidates are extracted.

### <Size display process (exemplary processing result screens)>

Figs. 9 are 21 are views illustrating exemplary display screens that are obtained as a result of executing the size display process in step 404 of Fig. 4.

### (i) Bar graph display example

Fig. 9 is a view showing an exemplary screen when a bar graph is used for the size display process in step 404 in Fig. 4.

In Fig. 9, when a user selects "All Files" of a radio button 900 (when the user specifies that all files should be displayed), the size display processing program 119 displays data on the file-size deletion candidate 130 on the screen of the display device 100. Fig. 9 shows an exemplary size display screen when "All Files" are selected.

When the user selects "Only Carefully Stored/Duplicate Files" of the radio button 900 (when the user specifies that only the carefully stored files/duplicate suspected files should be displayed), the size display processing program 119 displays data on the carefully stored/duplicate suspected file-size deletion candidate 131.

When the user selects "Compare and Display" of the radio button 900 (when the user specifies that files should be compared and displayed), the size display processing program 119 displays data on both the file-size deletion candidate 130 and the carefully stored/duplicate suspected file-size deletion candidate 131.

The size display processing program 119, in a graph display area 901, plots the array element numbers of the file deletion candidate 130 in the horizontal axis and plots the values of the size 204 of the array elements of the file information 121 with the same file ID 200 as the file ID 304 of the file-size deletion candidate 130 in the vertical axis. Then, the size display processing program 119 displays a graph in normal scale or log scale in accordance with the scale designation of the vertical axis and the horizontal axis in the axis scape designation field 902. Further, when the user enters a value in one of a text box 903 or 904, the size display processing program 119 automatically re-computes the other value, and shows how much percentage of the total sum of the sizes 204 of all the array elements of the file information 121 is accounted for when the cumulative sum of the sizes 204 of the array elements of the file information 121 with the same file ID 200 as the file ID 304 is determined, in order of the array elements of the file-size deletion candidate 130. For example, the bar-graph-based size display processing program 119, upon receiving a press of a user, who has viewed the graph of Fig. 9, on a "Display Deletion Candidates" button 905, performs the process of displaying the deletion candidates in step 405 of Fig. 4 for the array elements of the file information 121 with the same file ID 200 as the file ID 304 in order of the array elements of the file-size deletion candidates 130, by the percentage designated in the text box 903. Then, the file names of the deletion candidates are displayed in descending order, and thus, it becomes possible for the user to determine if the files should be deleted by referring to the displayed information.

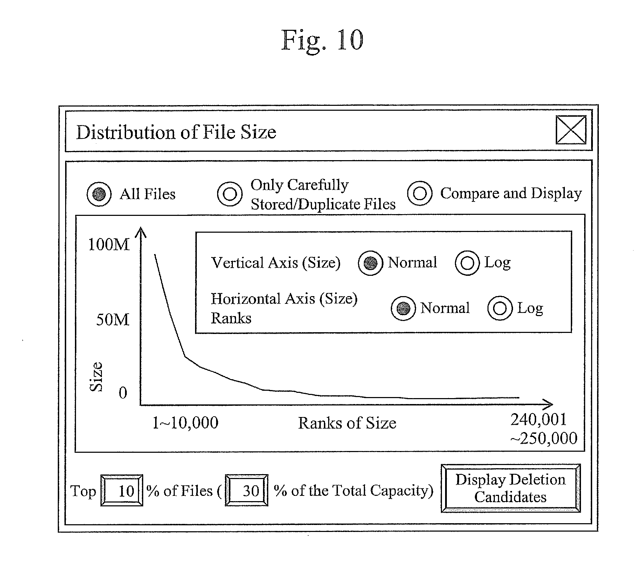

Although Fig. 9 shows an example in which the total sum of the carefully stored files and the duplicated suspected files is displayed when the "Only Carefully Stored/Duplicate Files" is selected, only one of them may be displayed. This is also true of the cases where the display configurations described below with reference to Figs. 10 to 23 are used.

### (ii) Exemplary display of line graph

Fig. 10 is a view showing an exemplary screen when a line graph display is used for the size display process in step 404 of Fig. 4. Fig. 10 is similar to Fig. 9 except that the distribution of files is represented by a line graph.

### (iii) Exemplary display of pie chart

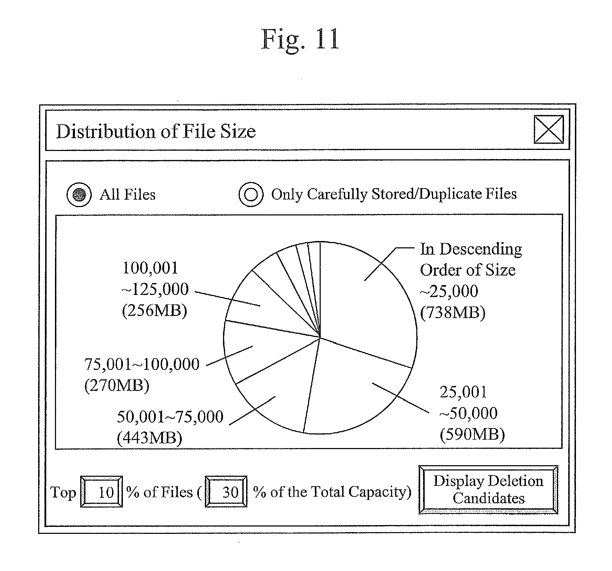

Fig. 11 is a view showing an exemplary screen when a pie chart is used for the size display process in step 404 of Fig. 4. Fig. 11 is similar to Fig. 9 except that the distribution of files is represented by a pie chart.

### (iv) Exemplary display of area graph

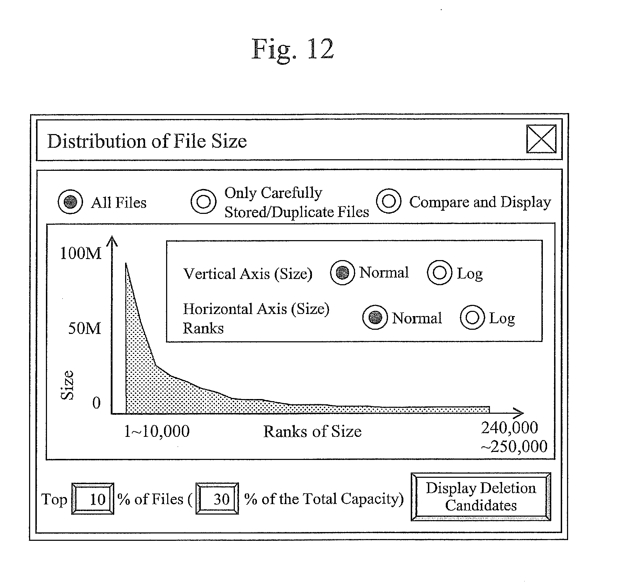

Fig. 12 is a view showing an exemplary screen when an area graph is used for the size display process in step 404 of Fig. 4. Fig. 12 is similar to Fig. 9 except that the distribution of files is represented by an area graph.

### (v) Exemplary display by means of table

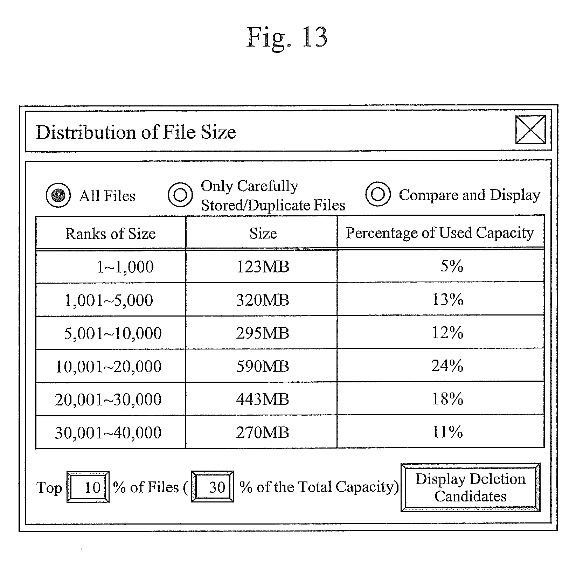

Fig. 13 is a view showing an exemplary screen when a table is used for the size display process in step 404 of Fig. 4. Fig. 13 is similar to Fig. 9 except that the distribution of files is represented by a table.

### (vi) Exemplary display of cumulative graph

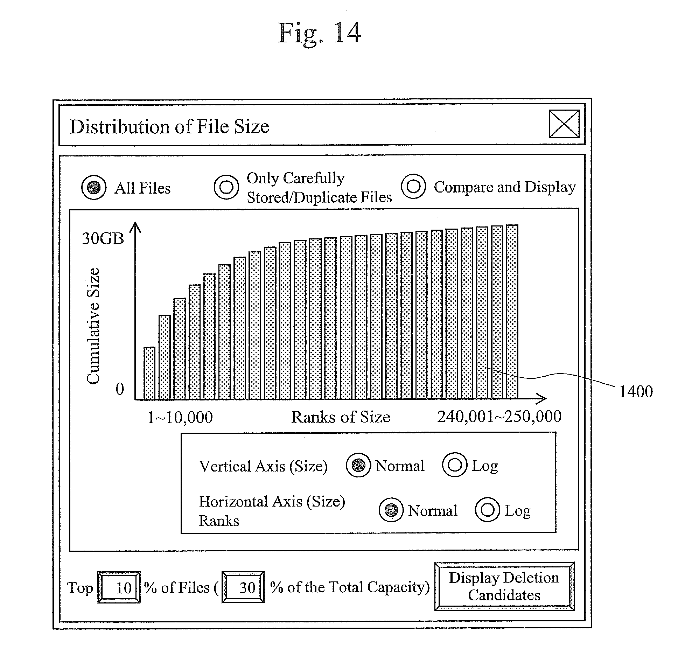

Fig. 14 is a view showing an exemplary screen when the cumulative value of the size is displayed with a bar graph for the size display process in step 404 of Fig. 4.

In a graph display area 1400, the size display processing program 119 plots the proportion to the number of the array elements of the file-size deletion candidate 130 in the horizontal axis, and plots the cumulative sum of the sizes 204 of the array elements of the file information 121 with the same file ID 200 as the file ID 304, in order of the array elements of the file-size deletion candidates 130, in the vertical axis. The other points are the same as those in Fig. 9.

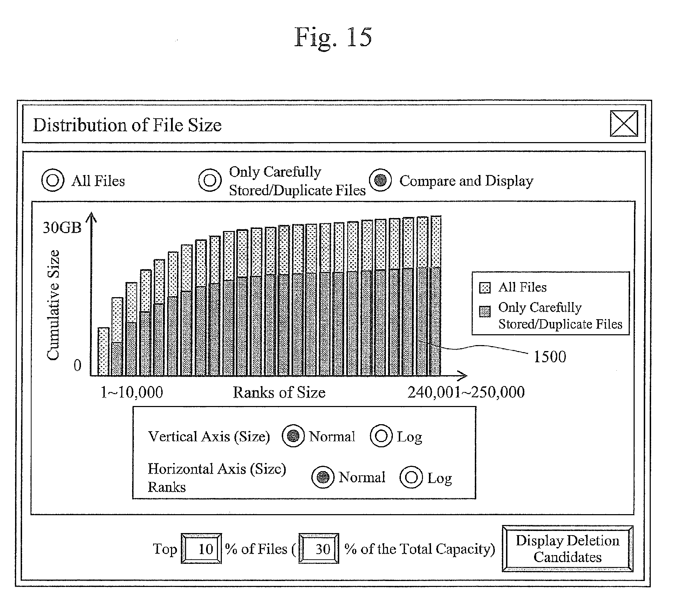

Fig. 15 is a view showing an exemplary display screen when a user selects "Compare and Display" in Fig. 14. That is, Fig. 15 shows an exemplary screen of a case where data on the file-size deletion candidate 130 and the carefully stored/duplicate suspected file-size deletion candidate 131 are compared and displayed in the size display process in step 404 of Fig. 4.

In the graph display area 1500 in Fig. 15, the size display processing program 119 concurrently displays on the screen of the display device 10 the value of the vertical axis determined using the array elements of the file-size deletion candidate 130 and the value of the vertical axis determined using the array elements of the carefully stored/duplicate suspected file-size deletion candidate 131.

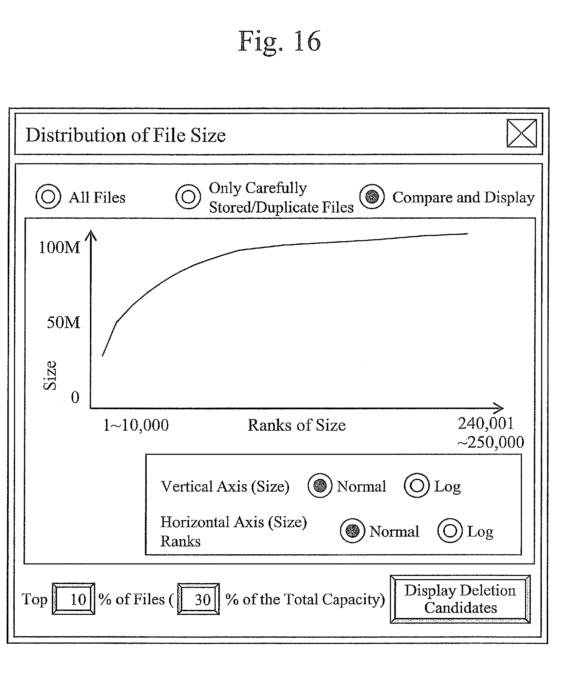

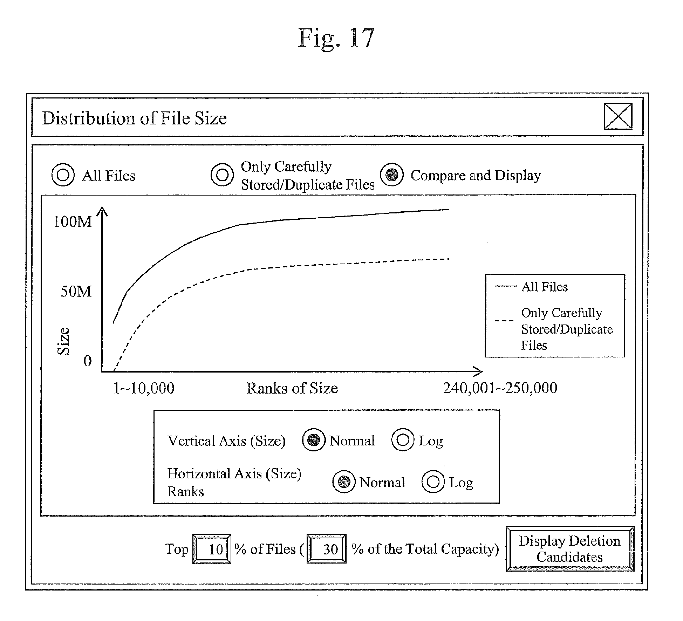

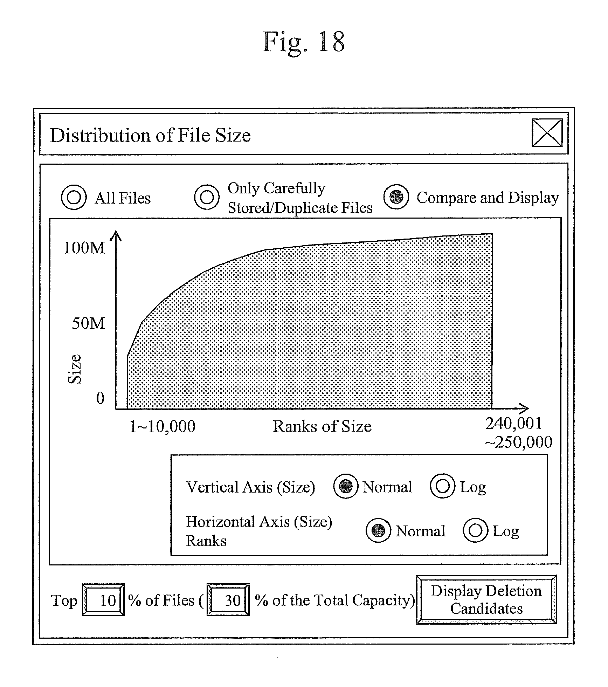

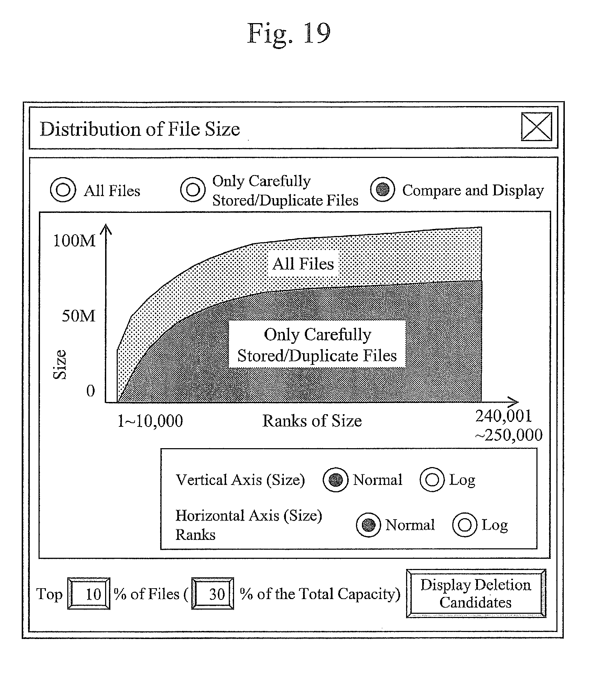

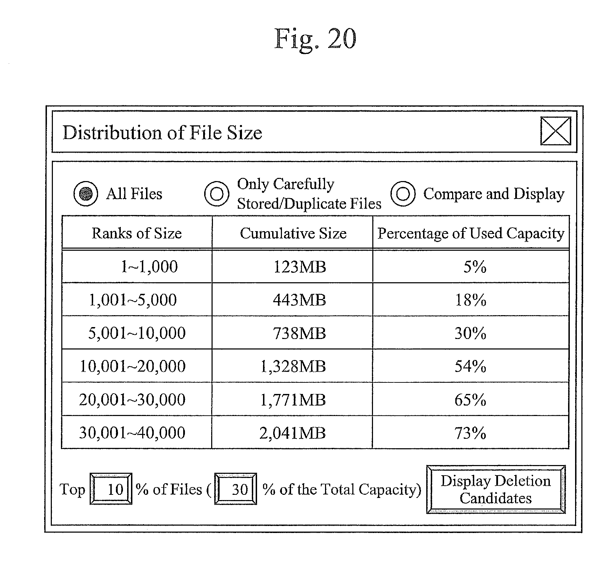

Figs. 16 and 17 each show a case where a line graph is used in an exemplary screen that is similar to those in Figs. 14 and 15. In addition, Figs. 18 and 19 each show a case where an area graph is used in an exemplary screen that is similar to those in Figs. 14 and 15. Further, Figs. 20 and 21 each show a case where a table is used in an exemplary screen that is similar to those in Figs. 14 and 15. Figs. 16 to 21 are similar to Figs. 14 and 15 in points other than the display configuration.

### <Variation>

(i) The checking of the update date 205 in steps 600 to 608 of Fig. 6 (the process of checking the carefully backed-up file) can be replaced with, when the folder name 201 or the file name 202 matches the regular expression 300 of any of the array elements of the date regular expression 126, a process of checking the value of the date. Further, although the update date is used in this specification, it is also possible to use the last access date, the creation date, or the like.

In the size display process in the aforementioned description shown in Figs. 9 to 21, a display configuration is shown in which the number of files is delimited in a given range. In this regard, when the number of files is delimited in a given range, it is also possible to use a display configuration in which the number of files is displayed based not on the absolute values of the files, but on the proportion of the files. In addition, although this embodiment shows a display example in which the size display processing unit displays the size in the vertical axis, it is also possible to display a histogram by delimiting the value of the size in the horizontal axis.

The display configurations such as bar graphs and pie charts used in Figs. 9 to 21 may be changed upon receipt of an instruction from a user. That is, a display in a bar graph (Fig. 9) configuration may be changed to, for example, a line graph display (Fig. 10), a table-based display (Fig. 13), a cumulative display (Fig. 14), or the like.

Further, although the size display process in Figs. 9 to 21 shows a configuration in which the vertical axis of the graph represents the specific value of the size, it is also possible to use a configuration in which the vertical axis represents the proportion of the size to the total capacity.

Furthermore, although the size display process in Figs. 14 to 21 shows a display configuration in which the value of the size increases with an increase in the value of the number of files, it is also possible to use a display configuration in which the value of the size for when the number of files is zero is set to 100%, and the "total sum of the remaining size after deletion" is displayed such that the value of the size decreases with an increase in the value of the number of files.

(ii) Although this embodiment has described an invention for efficiently reducing the used capacity by displaying the size distribution and the cumulative size of individual files, it is also possible to realize management of the impotent item of reducing the used capacity by displaying the size distribution and the cumulative size of each sub-folder immediately under a folder designated by a user, the size distribution and the cumulative size of each organization, the size distribution and the cumulative size of each physical machine such as a file server, the size distribution and the cumulative size of each management target in an enterprise search, an archiving system, and the like.

(iii) This embodiment has described Features 2-1 to 2-13 as examples of a file that seems to be a backup file that has been carefully and redundantly stored by an individual by performing backup on a per-folder basis. However, other features may also be used. For example, there are cases where a file name includes a character string that indicates that paste operations have been repeated a plurality of times in performing copy and paste. There are also cases where, for example, the name of an employee who once belonged to an organization but has now retired or moved to a different division is included in a folder name or a file name or is held as information on the owner of the file system, and also the update date of the file is old. There are also cases where, for example, a file name or a folder name includes a character string that indicates software of a type, which will no longer require an installer upon completion of an install operation, or an installer of a printer. In addition, there are also cases where, for example, a file has an extension that is not expected to be used in operations such as files of drawing used in industries other than manufacturing industries, movie files used in industries other than advertising sales industries, files that are executable in an environment in which industrially usable software is designated, and the like. Further, there are also cases where, for example, a file name includes a character string that indicates that the file is easily available from a webpage of outside the company or a portal site of the company. Furthermore, there are also cases where, for example, a file that has an extension indicating that it is a compressed file, and a file or a folder that is identical to the compressed file except in the extension and has a larger size than the compressed file is present, and it is indicated that both the compressed file and the original file are stored.

(iv) Although this embodiment has described that a small number of large-size files account for a high proportion of the capacity of the file server, this feature is also true of divisions, individual users, and the like. That is, a small number of divisions in an entire organization account for a high proportion of the capacity of the file server, a small number of users of the whole members of a division account for a high proportion of the capacity of the file server, and a small number of files created by one user account for a high proportion of the capacity of the file server. Thus, display of the size display processing unit may be performed not on a per-file basis but on a per-division basis or a per-individual-user basis.

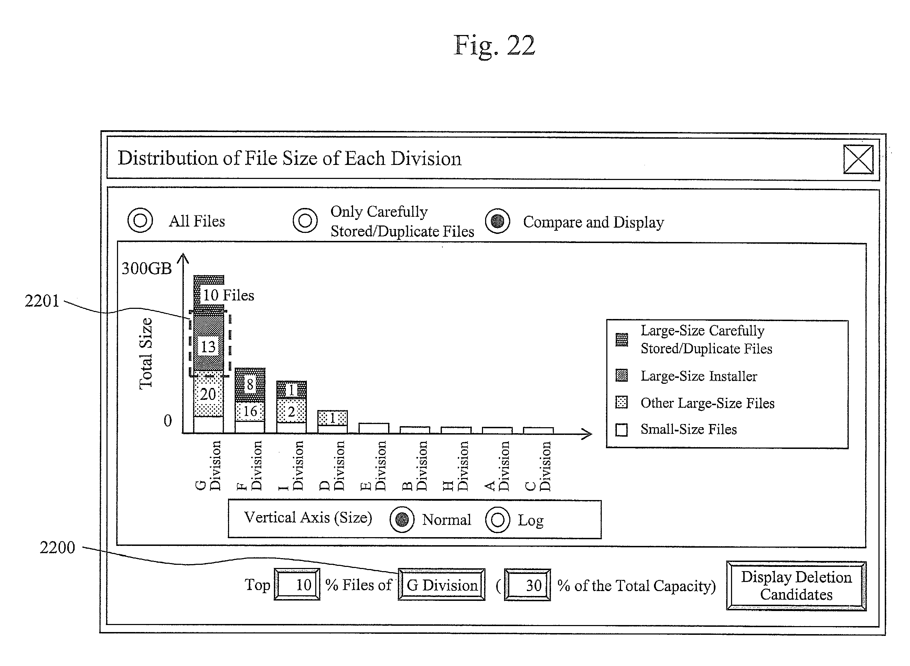

In addition, it is also possible to perform display such as the one shown in Fig. 22 by combining the distribution of the proportion of the used capacity accounted for by each division with the distribution of the file size, and switch display to a screen of the deletion candidate display processing unit upon receipt of the designation of a division name. Further, as indicated by reference numeral (dotted frame) 2201, it is also possible to switch display to a screen of the deletion candidate display processing unit upon receipt of the designation of a file by a pointing device.

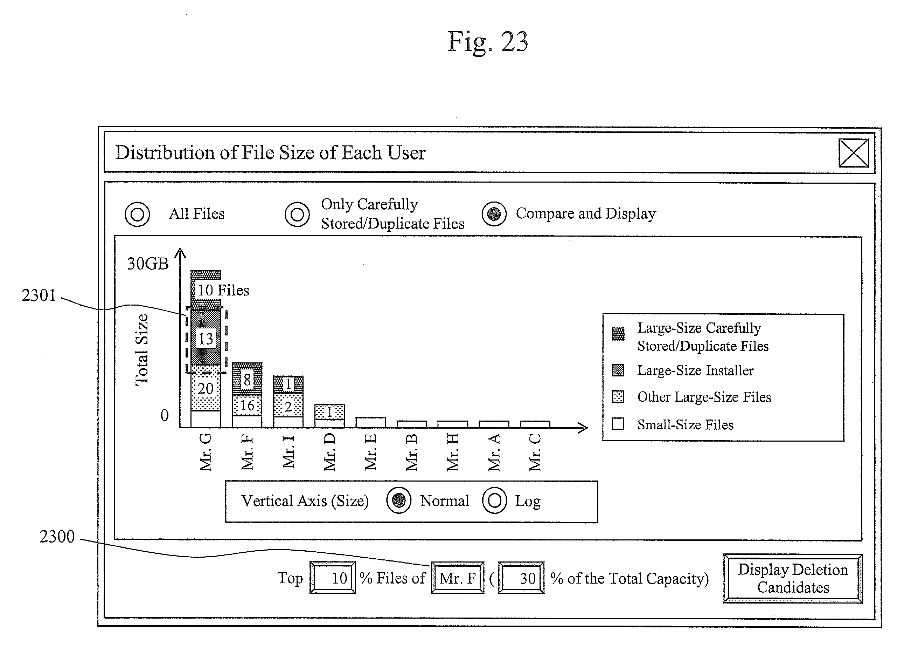

Further, it is also possible to perform display such as the one shown in Fig. 23 by combining the distribution of the proportion of the used capacity accounted for by each user with the distribution of the file size, and switch display to a screen of the deletion candidate display processing unit upon receipt of the designation of a user name as indicated by reference numeral 2300. Furthermore, it is also possible to switch display to a screen of the deletion candidate display processing unit upon receipt of the designation of a file by a pointing device as indicated by reference numeral (dotted frame) 2301. Moreover, it is also possible to combine the distribution of the proportion of the used capacity accounted for by each division, the distribution of the proportion of the used capacity accounted for by each user, and the distribution of the file size, and plot them in three dimensions. Although Figs. 23 and 24 each show an example in which a bar graph is displayed, it is also possible to display a line graph, a pie chart, an area graph, other graphs, or a table.

(v) This embodiment selects and displays, among the files stored in the file server, files that have, if deleted, a highly advantageous effect of reducing the used capacity of the file server or files that seem to have been carefully stored and files that are suspected to be stored in duplicate and have, if deleted, a highly advantageous effect of reducing the used capacity of the file server. However, the problem of the capacity can also be solved by compressing the files or evacuating the files to archive storage without deleting them. Thus, it is also possible to select and display, among the files stored in the file server, files that have, if compressed, a highly advantageous effect of reducing the used capacity of the file server, or files that seem to have been carefully stored and files that are suspected to be stored in duplicate and have, if compressed, a highly advantageous effect of reducing the used capacity of the file server, or select and display, among the files stored in the file server, files that have, if archived, a highly advantageous effect of reducing the used capacity of the file server, or files that seem to have been carefully stored and files that are suspected to be stored in duplicate and have, if archived, a highly advantageous effect of reducing the used capacity of the file server.

(vi) This embodiment has described a process for solving the problem of the capacity by actually deleting, compressing, or archiving files, for example. However, it is also possible to estimate the number of steps required to check if any of the files are deletable, the number of steps required to check if any of the files are compressible, or the number of steps required to check if any of the files are archivable. That is, it is possible to inspect, among the files stored in the file server, the number of files that have, if deleted, a highly advantageous effect of reducing the used capacity of the file server, or files that seem to have been carefully stored and files that are suspected to be stored in duplicate and have, if deleted, a highly advantageous effect of reducing the used capacity of the file server, and estimate the number of the checking steps based on the number of the files. Alternatively, it is also possible to use the average distribution determined from the number of files stored in the file server and the total size thereof to estimate, among the files stored in the file server, the number of files that have, if deleted, a highly advantageous effect of reducing the used capacity of the file server, files that seem to have been carefully stored and files that are suspected to be stored in duplicate and have, if deleted, a highly advantageous effect of reducing the used capacity of the file server, and estimate the number of the checking steps based on the number of the files.

### <Conclusion>

The business document processing device in accordance with this embodiment at least has, stored in its DB or memory, file information including information on the file name, folder name, file size, and update date of a plurality of files stored in a file server, and carefully-stored-data indication information indicating a file that has been carefully backed up by a user. Using such information, the business document processing device generates assistance information for managing the used capacity of the file server, and displays it on a display screen. In the case of generating the assistance information, the business document processing device checks the file information on each a plurality of files against the carefully-stored-data indication information to determine if each of the plurality of files is a carefully stored file that has been carefully backed up. Then, the business document processing device sorts the plurality of carefully stored files in descending order of file size, and displays the result of sorting as the assistance information. In addition, the business document processing device compares the file information on each of the plurality of files with one another to determine if the plurality of files include duplicate-stored suspected files that have a possibility of having been stored in duplicate. Then, when a plurality of duplicate-stored suspected files are included in the collection for generating the assistance information, the business document processing device sorts the files including the duplicate-stored suspected files and the plurality of carefully stored files in descending order of file size, and displays the result of sorting as the assistance information. Accordingly, it is possible to efficiently present information on the deletable files to a user, so that the user can efficiently reduce the size through a small number of steps of checking if any of the files are deletable.

More specifically, based on the conditions of Features 2-1 to 2-13 found out by the inventor, files (carefully stored files), which have been carefully stored as backup files in the past and have been left for a long period of time, and now are less important, are identified. When such conditions are used, it is possible to identify unexpected files that are totally different from files predicted to be unnecessary by the user (see Feature 1) and that consume a high proportion of the capacity of the file server. As such files are unexpected for the user, they are difficult to be found out with the ordinary search method, but according to the present invention, such files can be easily discovered. Further, the user can know the relationship between the number of files to be deleted and the used capacity of the file server that can be reduced. Accordingly, it is possible to allow the user to perform management based on the estimation of the steps, and encourage the user to check if any of the files are deletable.

It is also possible to sort a plurality of files in descending order of file size to generate a result of sorting of all files, and then display as the assistance information information that is obtained by comparing the result of sorting of all files with the result of sorting of duplicate-stored suspected files and carefully stored files, in response to a request from a user. Accordingly, the user can know the proportion of deletable files to all files stored in the file server, and also know how much used capacity of the file server can be reduced by deleting such files.

It is also possible to compute the cumulative file size of the duplicate-stored suspected files and the carefully stored files, and display the result of sorting of the duplicate-stored suspected files and the carefully stored files in accordance with the cumulative file size (see Figs. 14 to 21). Accordingly, it becomes possible for the user to intuitively understand how much used capacity can be compressed by deleting how many files.

In addition, the user can designate one of the percentage of files of higher-rank file size in the file server (see reference numeral 903 in Fig. 9) or the percentage of how much of the total capacity of the file server is used by such files (see reference numeral 904 in Fig. 9). When the user designates such percentage, the other percentage that has not been designated is computed in response. Then, the designated percentage and the computed percentage are displayed together with the assistance information. Accordingly, the user can decide how much used capacity should be intentionally compressed. Further, at this time, if the user presses the "Display Deletion Candidates" (see reference numeral 905 in Fig. 9), file information (file name and folder name) on files corresponding to the designated percentage or the computed percentage of the files of higher-rank file size is displayed from among the files of higher-rank file size obtained as a result of sorting all files. Accordingly, it becomes possible to switch a screen from a display of the size or the cumulative size of files in the file server to a display of files in the file server that have, if deleted, a highly advantageous effect of reducing the used capacity of the file server, and thus efficiently manage the capacity of the file server.

The present invention can also be realized by a program code of software that implements the function of the embodiment. In such a case, a storage medium having recorded thereon the program code is provided to a system or a device, and a computer (or a CPU or a MPU) in the system or the device reads the program code stored in the storage medium. In this case, the program code itself read from the storage medium implements the function of the aforementioned embodiment, and the program code itself and the storage medium having recorded thereon the program code constitute the present invention. As the storage medium for providing such a program code, for example, a flexible disk, CD-ROM, DVD-ROM, a hard disk, an optical disc, a magneto-optical disk, CD-R, a magnetic tape, a nonvolatile memory card, ROM, or the like is used.

Further, based on an instruction of the program code, an OS (operating system) running on the computer or the like may perform some or all of actual processes, and the function of the aforementioned embodiment may be implemented by those processes. Furthermore, after the program code read from the storage medium is written to the memory in the computer, the CPU or the like of the computer may, based on the instruction of the program code, perform some or all of the actual processes, and the function of the aforementioned embodiment may be implemented by those processes.

Moreover, the program code of the software that implements the function of the embodiment may be distributed via a network, and thereby stored in storage means such as the hard disk or the memory in the system or the device, or the storage medium such as CD-RW or CD-R, and at the point of use, the computer (or the CPU or the MPU) in the system or the device may read the program code stored in the storage means or the storage medium and execute the program code.

Finally, it should be appreciated that the process and technology described herein may be implemented substantially by any combination of components without being related to any specific device. Further, various types of general-purpose devices can be used in accordance with the teaching described herein. It may be found to be advantageous to construct a dedicated device to execute the steps of the method described herein. In addition, various inventions can be formed by appropriately combining a plurality of components disclosed in the embodiment. For example, some components may be removed from the whole components shown in the embodiment. Further, the components in different embodiments may be appropriately combined. Although the present invention has been described with reference to specific examples, such examples are shown not for limiting purposes but for explanation purposes in all aspects. Those skilled in the art may appreciate that there are a number of combinations of hardware, software, and firmware that are suitable for implementing the present invention. For example, the software described herein may be implemented by an assembler or a wide range of programs or script languages such as C/C++, perl, Shell, PHP, or Java (registered trademark).

Further, in the aforementioned embodiment, the control lines and information lines represent those that are considered to be necessary for description purposes, and do not necessarily represent all control lines and information lines that are necessary for a product. In practice, all structures may be mutually connected.

In addition, those skilled in the art may appreciate that other implementations of the present invention are apparent from consideration of the specification and the embodiment of the present invention. Various configurations and/or components of the embodiment described herein may be used either alone or in any combination. The specification and the specific examples are merely typical examples. The scope and spirit of the present invention are represented by the following claims.

### Reference Signs List

- 100: Display device
- 101: File information DB
- 102: Keyboard
- 103: Pointing device
- 104-111: Various databases
- 112: Central processing unit
- 113: Program memory
- 114: Data memory

## Claims

1. A document processing device for presenting assistance information for sorting a plurality of files stored in a file server to allow a reduction of a used capacity of the file server, the device comprising:
a storage device having stored therein file information including information on a file name, folder name, file size, and update date of the plurality of files, and carefully-stored-data indication information indicating a file that has been carefully backed up by a user; and
a processor configured to generate the assistance information on the basis of the file information, and present the assistance information via a display device,
wherein the processor is configured to determine, by checking the file information on each of the plurality of files against the carefully-stored-data indication information, if each of the plurality of files is a carefully stored file that has been carefully backed up, sort the plurality of carefully stored files in descending order of the file size, and present a result of the sorting as the assistance information.

2. The document processing device according to claim 1, wherein the processor is configured to compare the file information on each of the plurality of files with one another to determine if the plurality of files include duplicate-stored suspected files that have a possibility of having been stored in duplicate, sort the plurality of duplicate-stored suspected files and the plurality of carefully stored files in descending order of the file size, and present a result of the sorting as the assistance information.

3. The document processing device according to claim 2, wherein the processor is configured to sort the plurality of files in descending order of the file size to generate a result of sorting of all files, and present as the assistance information information that is obtained by comparing the result of the sorting of all files with result of the sorting of the duplicate-stored suspected files and the carefully stored files in response to a request from a user.

4. The document processing device according to claim 2, wherein the processor is configured to compute a cumulative file size of the duplicate-stored suspected files and the carefully stored files, and display a result of sorting of the duplicate-stored suspected files and the carefully stored files on the display device in accordance with the cumulative size of the files.

5. The document processing device according to claim 3, wherein the processor is configured to, in response to designation of one of a percentage of files of higher-rank file size among the plurality of files in the file server or a percentage of the total capacity of the file server that is used by the files, compute the other percentage, and display the designated percentage and the computed percentage together with the assistance information.

6. The document processing device according to claim 5, wherein the processor is further configured to, in response to an instruction of a user to display deletion candidates, display the file information on files corresponding to, from among the files of higher-rank file size obtained as the result of sorting all files, the designated percentage or the computed percentage of the files of higher-rank file size.

7. A file server management assistance method for presenting assistance information for sorting a plurality of files stored in a file server, using a document processing device, to allow a reduction of a used capacity of the file server, the document processing device including a storage device having stored therein file information including information on a file name, folder name, file size, and update date of the plurality of files, and carefully-stored-data indication information indicating a file that has been carefully backed up by a user, and a processor configured to generate the assistance information on the basis of the file information, and present the assistance information via a display device, the file server management assistance method comprising the following steps performed by the processor:
checking the file information on each of the plurality of files against the carefully-stored-data indication information;
determining, on the basis of a result of the checking, if each of the plurality of files is a carefully stored file that has been carefully backed up; and
sorting the plurality of carefully stored files determined in the step of determining if each of the plurality of files is the carefully stored file, in descending order of the file size, and presenting a result of the sorting as the assistance information.

8. The file server management assistance method according to claim 7, further comprising the following steps performed by the processor:
comparing the file information on each of the plurality of files with one another;
determining, on the basis of a result of the comparison, if the plurality of files include duplicate-stored suspected files that have a possibility of having been stored in duplicate; and
sorting the plurality of duplicate-stored suspected files determined in the step of determining if the plurality of files include the duplicate-stored suspected files, and the carefully stored files, in descending order of the file size, and presenting a result of the sorting as the assistance information.

9. The file server management assistance method according to claim 8, further comprising the following steps performed by the processor:
sorting the plurality of files in descending order of the file size to generate a result of sorting of all files; and
presenting as the assistance information information that is obtained by comparing the result of the sorting of all files with the result of the sorting of the duplicate-stored suspected files and the carefully stored files.

10. The file server management assistance method according to claim 8, further comprising the following steps performed by the processor:
computing a cumulative file size of the duplicate-stored suspected files and the carefully stored files; and
displaying a result of sorting of the duplicate-stored suspected files and the carefully stored files in accordance with the cumulative file size.

11. The file server management assistance method according to claim 9, further comprising the following steps performed by the processor:
computing, in response to designation of one of a percentage of files of higher-rank file size among the plurality of files in the file server or a percentage of the capacity of the file server used by the files, the other percentage; and
displaying the designated percentage and the computed percentage together with the assistance information.

12. The file server management assistance method according to claim 11, further comprising the following steps performed by the processor:
computing, in response to an instruction of a user to display deletion candidates, display the file information on files corresponding to, from among the files of higher-rank file size obtained as the result of sorting all files, the designated percentage or the computed percentage of the files of higher-rank file size.

13. A file server management assistance program for presenting assistance information for sorting a plurality of files stored in a file server, using a document processing device, to allow a reduction of a used capacity of the file server, the document processing device including a storage device having stored therein file information including information on a file name, folder name, file size, and update date of the plurality of files, and carefully-stored-data indication information indicating a file that has been carefully backed up by a user, and a processor configured to generate the assistance information on the basis of the file information, and present the assistance information via a display device, the file server management assistance program being configured to cause the processor to perform:
checking the file information on each of the plurality of files against the carefully-stored-data indication information;
determining, on the basis of a result of the checking, if each of the plurality of files is a carefully stored file that has been carefully backed up; and
sorting the plurality of carefully stored files determined in the step of determining if each of the plurality of files is the carefully stored file, in descending order of the file size, and presenting a result of the sorting as the assistance information.
